# EUROPÄISCHE PATENTSCHRIFT

(11) **EP 2 622 183 B1**
(45) Veröffentlichungstag und Bekanntmachung des Hinweises auf die Patenterteilung: **29.06.2016**
(21) Anmeldenummer: 11769818.3
(22) Anmeldetag: 28.09.2011
(51) Int. Cl.: F01N 3/20, F01N 13/16

(54) **REDUKTIONSMITTELTANK MIT TEMPERATURSENSOR**
REDUCING-AGENT TANK WITH TEMPERATURE SENSOR
RÉSERVOIR D'AGENT DE RÉDUCTION POURVU D'UN CAPTEUR DE TEMPÉRATURE

(30) Priorität: 01.10.2010 DE 102010047277
(43) Veröffentlichungstag der Anmeldung: 07.08.2013
(73) Patentinhaber: Continental Automotive GmbH, 30165 Hannover (DE)
(72) Erfinder: BAUER, Peter, 53721 Siegburg (DE); HODGSON, Jan, 53840 Troisdorf (DE)
(86) Internationale Anmeldenummer: PCT/EP2011/066822
(87) Internationale Veröffentlichungsnummer: WO 2012/041883

(56) Entgegenhaltungen:
- EP-A1- 1 925 354
- DE-A1-102007 027 413
- DE-A1-102008 000 549

## Beschreibung

Die vorliegende Erfindung betrifft eine Tankanordnung mit einem Dosiersystem für ein Reduktionsmittel. Mit einer derartigen Anordnung kann ein Reduktionsmittel zur selektiven katalytischen Reduktion von Abgasbestandteilen im Abgas einer Verbrennungskraftmaschine mit einem definierten bzw. vorgegebenen Druck bereitgestellt werden. Das mit einem gewünschten Druck bereitgestellte Reduktionsmittel kann zum Beispiel über einen Injektor einem Abgasbehandlungssystem für das Verfahren der selektiven katalytischen Reduktion (SCR-Verfahren, *SCR=selecitve catalytic reduction*) zugeführt werden.

Bei der selektiven katalytischen Reduktion (SCR) wird in einer Abgasbehandlungsvorrichtung ein Reduktionsmittel bzw. ein Reduktionsmittelvorläufer dem Abgas zugeführt. Reduktionsmittelvorläufer werden regelmäßig auch als Reduktionsmittel bezeichnet. Als Reduktionsmittel kommt beispielsweise Ammoniak oder dergleichen zum Einsatz. Als Reduktionsmittelvorläufer kommt beispielsweise Harnstoff und/oder eine Harnstoff-Wasser-Lösung zum Einsatz. Ein bereits erprobter Reduktionsmittelvorläufer ist eine 32,5 %ige Harnstoff-Wasser-Lösung, welche unter dem Handelsnamen AdBlue erhältlich ist. Solche Reduktionsmittelvorläufer werden dann im Abgassystem und/oder in einer zwischengeschalteten Verdampfereinheit und/oder Hydrolyseeinheit zu dem eigentlichen Reduktionsmittel umgewandelt. Eine Harnstoff-Wasser-Lösung wird typischerweise zu Ammoniak umgesetzt. In einem geeigneten katalytischen Konverter können dann Stickoxidverbindungen im Abgas zusammen mit dem Ammoniak in unschädliche Bestandteile wie Stickstoff, Wasser und Kohlendioxid umgesetzt werden.

Für die Bereitstellung von Reduktionsmittel ist regelmäßig ein eigenes Bevorratungssystem und/oder Dosiersystem im Kraftfahrzeug vorgesehen. Ein derartiges System kann mit erheblichen Kosten verbunden sein.

Zudem ist bei der Speicherung von flüssigem Reduktionsmittel und insbesondere bei der Speicherung von AdBlue problematisch, dass dieses bei niedrigen Temperaturen einfriert. AdBlue friert bei circa -11 °C ein. Ein System zur Bevorratung solcher Reduktionsmittel muss deshalb einfrierfest ausgelegt sein. Dazu ist es vorteilhaft, wenn die Temperatur des Reduktionsmittels bekannt ist. Zur Temperaturmessung werden regelmäßig Temperatursensoren verwendet. Es hat sich herausgestellt, dass die Temperatursensoren durch das Reduktionsmittel geschädigt werden können.

Aus der EP 1 925 354 A1 ist ein Reduktionsmitteltank bekannt an dem eine Förderpumpe angeordnet ist, mit der Reduktionsmittel aus dem Reduktionsmitteltank entnommen werden kann. Die Förderpumpe ist dabei außerhalb von dem Reduktionsmitteltank unmittelbar an dem Reduktionsmitteltank angeordnet. Dazu weißt der Reduktionsmitteltank eine Reduktionsmitteltanköffnung auf, die von einem Verschlusselement verschlossen ist. Die Förderpumpe ist außen an dem Verschlusselement angebracht. An dem Verschlusselement ist ausserdem auf der nach innen zum Tankinneren hin weisenden Seite ein Reduktionsmitteltemperatursensor angebracht.

Aus der DE 10 2007 027 413 A1 ist ein Reduktionsmittelversorgungssystem mit Temperatursensoren bekannt, die beispielsweise in oder an einem Tank oder einer Pumpe angeordnet sein können.

Der Erfindung liegt daher die Aufgabe zugrunde eine Vorrichtung zur Bereitstellung von flüssigem Reduktionsmittel anzugeben, die die mit Bezug auf den Stand der Technik geschilderten Probleme zumindest teilweise löst. Insbesondere soll eine Vorrichtung zur besonders vorteilhaften Bestimmung einer Temperatur im Reduktionsmitteltank angegeben werden.

Diese Aufgaben werden gelöst mit einer Vorrichtung gemäß den Merkmalen des Patentanspruches 1. Weitere Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung weiter und gibt zusätzliche Ausführungsbeispiele an.

Die Erfindung betrifft eine Vorrichtung zur Bereitstellung von flüssigem Reduktionsmittel aufweisend einen Reduktionsmitteltank mit einer Tankwand, die ein Tankinneres begrenzt, wobei die Tankwand einen metallischen Wandabschnitt aufweist und die Vorrichtung einen Temperatursensor aufweist der außerhalb des Reduktionsmitteltanks angeordnet ist, wobei der Temperatursensor dazu eingerichtet ist, eine Temperatur des Reduktionsmittels im Reduktionsmitteltank durch den metallischen Wandabschnitt hindurch zu bestimmen.

in den abhängig formulierten Patentansprüchen angegeben. Es ist darauf hinzuweisen, dass die in den abhängig formulierten Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung weiter und gibt zusätzliche Ausführungsbeispiele an.

Die Erfindung betrifft eine Vorrichtung zur Bereitstellung von flüssigem Reduktionsmittel aufweisend einen Reduktionsmitteltank mit einer Tankwand aus Kunststoff, die ein Tankinneres begrenzt, wobei die Tankwand einen metallischen Wandabschnitt aufweist und die Vorrichtung einen Temperatursensor aufweist der außerhalb des Reduktionsmitteltanks in Kontakt mit dem metallischen Wandabschnitt angeordnet ist, wobei der Temperatursensor dazu eingerichtet ist, indirekt eine Temperatur des Reduktionsmittels im Reduktionsmitteltank über die Leitfähigkeit des metallischen Wandabschnitts zu bestimmen.

Ein außerhalb des Reduktionsmitteltanks angeordneter Temperatursensor befindet sich im Wesentlichen nicht in einem Tankinneren des Reduktionsmitteltanks bzw. nicht in dem Bereich des Reduktionsmitteltanks, welcher mit Reduktionsmittel gefüllt ist. Der Innenraum einer sich in den Reduktionsmitteltank hinein erstreckenden Einstülpung gehört nicht zum Tankinneren. Eine derartige Einstülpung verkleinert das Tankinnere vielmehr.

Besonders vorteilhaft ist die erfindungsgemäße Vorrichtung, wenn der metallische Wandabschnitt von einem metallischen Topf gebildet ist, der sich in das Tankinnere hinein erstreckt. Ein derartiger Topf weist vorzugsweise einen Topfboden und eine Topfwand auf, die zusammen ein Topfinneres begrenzen. Darüber hinaus existiert eine dem Topfboden gegenüber liegende Öffnung. Die Öffnung zeigt vorzugsweise vom Tankinneren weg und der Topfboden zeigt zum Tankinneren hin.

Der Temperatursensor ist vorzugsweise auf der Innenseite des metallischen Topfes und damit außerhalb des Tankinneren angeordnet. Besonders bevorzugt ist der Temperatursensor innerhalb des metallischen Topfes dort angebracht, wo der metallische Topf weit in den Reduktionsmitteltank hinein ragt. Der Temperatursensor ist vorzugsweise nicht in unmittelbarer Nähe zu einem Randbereich des Topfes bzw. zu der Öffnung des Topfes angeordnet. Bevorzugt befindet sich der Temperatursensor am Topfboden oder an einer Topfwand in der Nähe des Topfbodens. Durch diese Anordnung kann mit dem Temperatursensor die Temperatur des Reduktionsmittels im Tank besonders präzise bestimmt werden, weil störende Einflüsse auf die Temperatur, die von Wärmequellen oder Wärmesenken in der Umgebung des Reduktionsmitteltanks ausgehen, auf die Temperatur in der Nähe de Topfbodens einen geringeren Einfluss haben als in der Nähe der Öffnung des Topfes.

Weiterhin besonders vorteilhaft ist die erfindungsgemäße Vorrichtung zur Bereitstellung von flüssigem Reduktionsmittel, wenn der Reduktionsmitteltank eine abgetrennte Kammer bildet, die an einer Tankwand des Reduktionsmitteltanks angeordnet ist.

Vorzugsweise ist die abgetrennte Kammer im Tankboden angeordnet. In einer weiteren bevorzugten Ausführungsform ist die abgetrennte Kammer in einer seitlichen Tankwand in der Nähe des Tankbodens angeordnet. Es ist allerdings auch möglich, dass die abgetrennte Kammer an einer Tankoberseite in der Tankwand vorgesehen ist.

Außerdem ist es vorteilhaft, wenn der Temperatursensor an dem metallischen Wandabschnitt befestigt ist. Besonders bevorzugt ist der Temperatursensor an dem metallischen Wandabschnitt stoffschlüssig befestigt, beispielsweise mit einem Klebeverfahren, einem Lötverfahren oder einem Schweißverfahren. Wichtig ist, dass zwischen dem metallischen Wandabschnitt und dem Temperatursensor ein Kontakt mit einer sehr guten Wärmeleitfähigkeit besteht. Dann kann die Temperatur des Reduktionsmittels in dem Tank besonders präzise bestimmt werden.

In einer weiteren Ausführungsform steht der Temperatursensor mit der Topfwand über ein Wärmeleitmittel in wärmeleitendem Kontakt. Dieses Wärmeleitmittel sollte eine besonders hohe Wärmeleitfähigkeit aufweisen. Gleichzeitig sollte der metallische Wandabschnitt im Bereich des Temperatursensors sowie gegebenenfalls vorhandene Wärmeleitmittel, die zur wärmeleitenden Verbindung zwischen dem metallischen Wandabschnitt und dem Temperatursensor dienen, eine möglichst geringe Wärmekapazität aufweisen. Dies verbessert die Reaktionsgeschwindigkeit des Temperatursensors auf Temperaturveränderungen des Reduktionsmittels, weil weniger Zeit benötigt wird, damit sich die Temperatur der wärmeleitenden Verbindung an die Temperatur des Reduktionsmittels im Reduktionsmitteltank anpasst.

Eine wichtige Idee der hier vorgestellten Erfindung ist, die Dosiereinheit in dem Topf, bzw. in der abgetrennten Kammer vorzusehen. Der Temperatursensor befindet sich dann in unmittelbarer Nähe zu der Dosiereinheit. Somit können Messdaten von dem Temperatursensor besonders vorteilhaft verarbeitet werden.

Gemäß einer Weiterbildung der erfindungsgemäßen Vorrichtung weist die Dosiereinheit zumindest eine Komponente aus der Gruppe der folgenden Komponenten auf:
- Pumpe;
- Filter;
- Drucksensor;
- Temperatursensor und
- Ventil.

Die Dosiereinheit beinhaltet bevorzugt alle Komponenten, die notwendig sind, um dass Reduktionsmittel unter einem definierten Druck bereitstellen zu können, jedenfalls aber zumindest eine Pumpe. Dazu können zudem weitere Pumpen, Ventile, Drucksensoren, Temperatursensoren und/oder Filter gehören, ebenso wie elektronische Bauteile, Verbindungsleitungen, etc.

Diese einzelnen Komponenten sind vorzugsweise an einer Grundplatte montiert. Die Grundplatte ist vorzugsweise metallisch. Beispielsweise kann die Grundplatte aus einem Edelstahl oder aus Aluminium gefertigt sein. In der Grundplatte kann mindestens ein Kanal vorgesehen sein, der die einzelnen Komponenten zum Transport bzw. der Förderung von Reduktionsmittel miteinander verbindet. Die (hintereinander oder parallel angeordneten) Kanäle können beispielsweise in die Grundplatte gebohrt sein. Die Grundplatte kann auch bereits mit diesen Kanälen als Gussteil hergestellt werden. Die Grundplatte kann Wärme zwischen den einzelnen Komponenten der erfindungsgemäßen Vorrichtung effektiv verteilen. Daher ist Aluminium als Werkstoff für die Grundplatte besonders vorteilhaft. Aluminium hat ein sehr gutes Verhältnis von Wärmeleitfähigkeit zu Gewicht.

Die Tankwand ist hauptsächlich aus Kunststoff gefertigt und der metallische Wandabschnitt ist in die Tankwand nicht lösbar eingesetzt. Wenn der Reduktionsmitteltank ein Spritzgussteil aus Kunststoff ist, ist der metallische Wandabschnitt in die Tankwand vorzugsweise eingespritzt. Der metallische Wandabschnitt kann in die Tankwand aber auch eingeschweißt oder eingegossen sein. Der metallische Wandabschnitt ist vorteilhafterweise eingegossen, wenn der Tank ein Gußteil ist. Ein eingeschweißter metallischer Wandabschnitt bietet sich beispielsweise dann besonders an, wenn das Kunststoffmaterial, aus welchem ein aus Kunststoff gefertigter Reduktionsmitteltank besteht, zu dem Zeitpunkt zu dem der metallische Wandabschnitt eingesetzt wird bereits ausgehärtet ist. Dann kann ein metallischer Wandabschnitt nicht mehr eingespritzt oder eingegossen werden. Es ist jedoch möglich das Kunststoffmaterial im Rahmen eines Schweißverfahrens partiell wieder aufzuschmelzen, um einen metallischen Wandabschnitt nicht lösbar mit dem Kunststoffmaterial der Tankwand zu verbinden.

Die Tankwand und der metallische Wandabschnitt können formschlüssig und/oder stoffschlüssig miteinander verbunden sein. Zur Verbesserung der Verbindung kann der metallische Wandabschnitt zumindest bereichsweise eine spezielle, beispielsweise aufgeraute, Oberfläche aufweisen.

In einer Weiterbildung der erfindungsgemäßen Vorrichtung ist an dem in den Tankboden eingespritzten Topf ein O-Ring zur Abdichtung vorgesehen.

Weiterhin vorteilhaft ist, wenn der Tankboden eine Hauptebene aufweist und die abgetrennte Kammer oberhalb der Hauptebene angeordnet ist. Mit einer Hauptebene ist regelmäßig eine ebene Fläche gemeint, in oder unmittelbar an der der größte Teil des Tankbodens angeordnet ist und bis zu der sich das Tankinnere zumindest teilweise erstreckt. Wenn die abgetrennte Kammer oberhalb dieser Hauptebene angeordnet ist, weist der Tankboden keine oder nur wenige über diese Hauptebene nach unten überstehenden Teilbereiche auf, so dass für die Abmaße der Vorrichtung im Wesentlichen die Abmaße des Reduktionsmitteltanks maßgeblich sind. Die Entnahmestelle der Dosiereinheit für das Reduktionsmittel sollte ebenfalls in der Nähe der Hauptebene angeordnet sein, damit der Reduktionsmitteltank im Betrieb möglichst vollständig entleert werden kann.

Auch erfindungsgemäß ist ein Kraftfahrzeug, aufweisend eine Verbrennungskraftmaschine und ein Abgasbehandlungssystem, aufweisend einen Injektor für Reduktionsmittel und eine erfindungsgemäße Vorrichtung, wobei der Injektor mit der Vorrichtung über eine Reduktionsmittelleitung verbunden ist.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Die in den Figuren dargestellten Ausführungsmerkmale sind auch jeweils einzeln mit den Merkmalen der Patentansprüche und der restlichen Beschreibung kombinierbar. Es zeigen:
- Fig. 1:: ein Kraftfahrzeug, aufweisend eine erfindungsgemäße Vorrichtung,
- Fig. 2:: eine erste Ausführungsvariante der erfindungsgemäßen Vorrichtung und
- Fig. 3:: eine zweite Ausführungsvariante der erfindungsgemäßen Vorrichtung,
- Fig. 4: eine dritte Ausführungsvariante der erfindungsgemäßen Vorrichtung, und
- Fig. 5: eine vierte Ausführungsvariante der erfindungsgemäßen Vorrichtung.

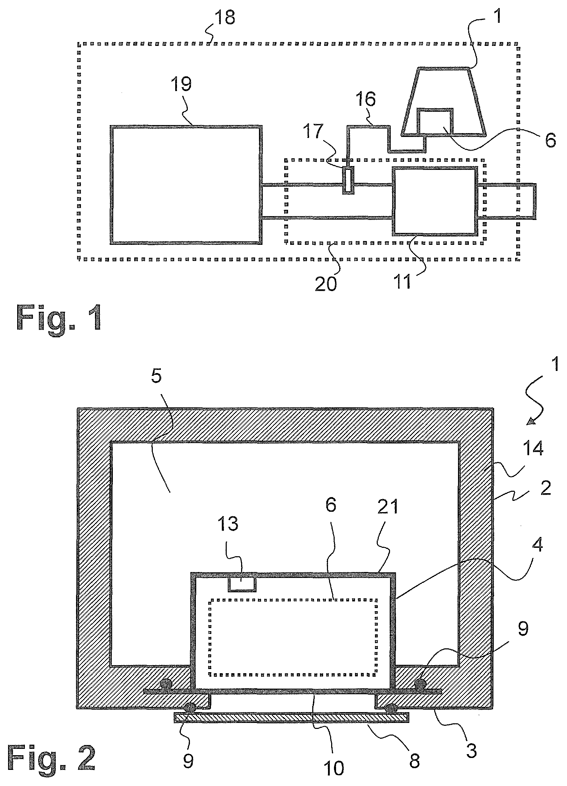

In der Fig. 1 ist ein Kraftfahrzeug 18, aufweisend eine Verbrennungskraftmaschine 19 sowie ein Abgasbehandlungssystem 20 dargestellt. In dem Abgassystem 20 ist ein SCR-Katalysator 11 vorgesehen. Dem Abgassystem 20 wird über einen Injektor 17 flüssiges Reduktionsmittel aus einer erfindungsgemäßen Vorrichtung 1 mit einer Dosiereinheit 6 zur Verfügung gestellt. Die erfindungsgemäße Vorrichtung 1 und der Injektor 17 sind über eine Reduktionsmittelleitung 16 miteinander verbunden.

In der Fig. 2 ist eine erste Ausführungsvariante der erfindungsgemäßen Vorrichtung 1 in einer stark vereinfachten Skizze dargestellt, bei welcher eine abgetrennte Kammer 4 als metallischer Topf 10 ausgeführt ist, der mit dem Tankboden 2 des Reduktionsmitteltanks 3 nicht lösbar verbunden ist. Dieser Topf 10 bildet den metallischen Wandabschnitt 22. Der Topf ist in den Tankboden 3 des Reduktionsmitteltanks 2 bzw. in die Tankwand 14 des Reduktionsmitteltanks 2 im Bereich des Tankbodens 3 vorzugsweise einspritzt, eingegossen oder eingeschweißt. Der Reduktionsmitteltank 2 ist aus Kunststoff hergestellt. In der abgetrennten Kammer 4 ist auch in dieser Ausführungsvariante die Dosiereinheit 6 vorgesehen, die hier als gestrichelter Kasten angedeutet ist. Der Topf 10 kann durch einen Deckel 8 verschlossen sein. Die Abdichtung von Topf 10 und Tankboden 3 zueinander kann mittels eingespritzter O-Ringe 9 erfolgen, so dass hier kein Kriechen von Reduktionsmittel entlang des Topfes 10 durch den Tankboden 3 hindurch aus dem Tankinneren 5 heraus möglich ist. Im Bereich des Topfes 10 können in den Tankboden 3 zudem O-Ringe eingespritzt oder angespritzt sein, die eine Abdichtung des Deckels 8 am Tankboden 3 ermöglichen. Gemäß Fig. 2 ist ein Temperatursensor 13 auf einer Innenseite der Topfwand 21 des Topfes 10 befestigt. Der Temperatursensor 13 ist dort vorzugsweise stoffschlüssig befestigt. Er kann beispielsweise angeklebt, angelötet oder angeschweißt sein.

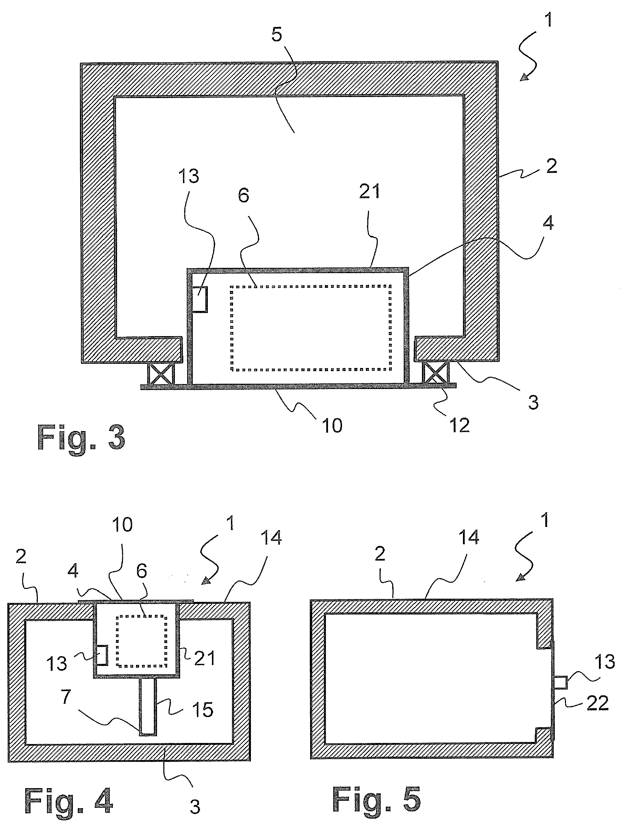

Die Fig. 3 zeigt eine weitere Ausführungsvariante der erfindungsgemäßen Vorrichtung, bei welcher die abgetrennte Kammer 4 aus dem Tankboden 3 des Reduktionsmitteltanks 2 herausnehmbar ist. Die abgetrennte Kammer 4 ist hier ebenfalls als Topf 10 ausgeführt. Auch gemäß der Fig. 3 bildet der Topf 10 den metallischen Wandabschnitt 22. Die Fixierung bzw. Befestigung der abgetrennten Kammer 4 bzw. des Topfes 10 im Tankboden 3 erfolgt mit einem Verschluss 12. Durch den Verschluss 12 ist ebenfalls eine sichere Abdichtung des Tankinneren 5 möglich. In der abgetrennten Kammer 4 ist auch in dieser Ausführungsvariante die Dosiereinheit 6 vorgesehen, die hier als gestrichelter Kasten angedeutet ist. In Fig. 3 ist auch dargestellt, dass im Inneren des Topfes 10 ein Temperatursensor 13 vorgesehen ist, welcher an der Innenseite der Topfwand 21 befestigt ist.

Der metallische Topf 10 weist eine sehr gute Wärmeleitfähigkeit auf. Daher kann mit Hilfe des Temperatursensors 13 indirekt eine Messung der Temperatur von Reduktionsmittel erfolgen, welches in dem Reduktionsmitteltank 2 vorhanden ist. Das Reduktionsmittel steht großflächig in Kontakt zu dem metallischen Topf 10, so dass die Temperaturmessung auch von der Innenseite des Topfes 10 aus präzise durchführbar ist. Der Temperatursensor 13 ist auch gemäß der Fig. 3 an der Innenseite der Topfwand 21 vorzugsweise stoffschlüssig befestigt. Er kann beispielsweise angeklebt, angelötet oder angeschweißt sein.

Die Fig. 4 zeigt eine weitere Ausführungsvariante der erfindungsgemäßen Vorrichtung 1. Gemäß der Fig. 4 ist die als Topf 10 ausgebildete abgetrennte Kammer 4 mit der Dosiereinheit 6 an einer Oberseite des Reduktionsmitteltanks 2 in der Tankwand 14 angeordnet und bildet dort den metallischen Wandabschnitt 22. Zur Überbrückung eines Abstandes zwischen der Entnahmestelle 7 und der abgetrennten Kammer 4 ist gemäß der Fig. 4 ein Entnahmerohr 15 vorgesehen. In der abgetrennten Kammer ist an dem metallischen Wandabschnitt 22 ein Temperatursensor 13 befestigt. Dieser Temperatursensor 13 kann beispielsweise angeklebt, angelötet oder angeschweißt sein.

Fig. 5 zeigt eine vierte Ausführungsvariante der erfindungsgemäßen Vorrichtung 1, bei welcher der metallische Wandabschnitt 22 der Tankwand 14 flächig ist und keine abgetrennte Kammer bildet. Auch bei dieser Ausführungsvariante ist außen auf dem metallischen Wandabschnitt 22 ein Temperatursensor 13 befestigt.

### Bezugszeichenliste

- 1: Vorrichtung
- 2: Reduktionsmitteltank
- 3: Tankboden
- 4: abgetrennte Kammer
- 5: Tankinnere
- 6: Dosiereinheit
- 7: Entnahme stelle
- 8: Deckel
- 9: O-Ring
- 10: Topf
- 11: SCR-Katalysator
- 12: SAE-Verschluss
- 13: Temperatursensor
- 14: Tankwand
- 15: Entnahmerohr
- 16: Reduktionsmittelleitung
- 17: Injektor
- 18: Kraftfahrzeug
- 19: Verbrennungskraftmaschine
- 20: Abgasbehandlungssystem
- 21: Topfwand
- 22: metallischer Wandabschnitt

## Patentansprüche

1. Vorrichtung (1) zur Bereitstellung von flüssigem Reduktionsmittel aufweisend einen Reduktionsmitteltank (2) mit einer Tankwand (14) aus Kunststoff, die ein Tankinneres (5) begrenzt, wobei die Tankwand (14) einen metallischen Wandabschnitt (22) aufweist und die Vorrichtung (1) einen Temperatursensor (13) aufweist, **dadurch gekennzeichnet, dass** der Temperatursensor (13) außerhalb des Reduktionsmitteltanks in Kontakt mit dem metallischen Wandabschnitt (22) angeordnet ist, wobei der Temperatursensor (13) dazu eingerichtet ist, indirekt eine Temperatur des Reduktionsmittels im Reduktionsmitteltank (2) über die Leitfähigkeit des metallischen Wandabschnitts (22) zu bestimmen.

2. Vorrichtung (1) nach Patentanspruch 1, wobei der metallische Wandabschnitt von einem metallischen Topf (10) gebildet ist, der sich in das Tankinnere (5) hinein erstreckt.

3. Vorrichtung (1) nach einem der vorhergehenden Patentansprüche, wobei der metallische Topf (10) eine abgetrennte Kammer (4) bildet, die an einer Tankwand (14) des Reduktionsmitteltanks (2) angeordnet ist.

4. Vorrichtung (1) nach Patentanspruch 2, wobei die abgetrennte Kammer (4) im Tankboden (3) angeordnet ist.

5. Vorrichtung (1) nach einem der vorhergehenden Patentansprüche, wobei der Temperatursensor (13) an dem metallischen Wandabschnitt (22) befestigt ist.

6. Vorrichtung (1) nach Patentanspruch 5, wobei der Temperatursensor (13) an dem metallischen Wandabschnitt (22) stoffschlüssig befestigt ist.

7. Vorrichtung (1) nach einem der vorhergehenden Patentansprüche, wobei die Dosiereinheit (6) zumindest eine Komponente aus der Gruppe der folgenden Komponenten aufweist:
- Pumpe;
- Filter;
- Drucksensor;
- Temperatursensor und
- Ventil.

8. Vorrichtung (1) nach einem der vorhergehenden Patentansprüche , wobei der Reduktionsmitteltank (2) eine Tankwand (14) aus Kunststoff umfasst und der metallische Wandabschnitt (22) nicht lösbar in die Tankwand (14) eingesetzt ist.

9. Kraftfahrzeug (18), aufweisend eine Verbrennungskraftmaschine (19) und ein Abgasbehandlungssystem (20), aufweisend einen Injektor (17) für Reduktionsmittel und eine Vorrichtung (1) nach einem der vorhergehenden Patentansprüche, wobei der Injektor (17) mit der Vorrichtung (1) über eine Reduktionsmittelleitung (16) verbunden ist.

## Claims

1. Device (1) for providing liquid reducing agent, having a reducing agent tank (2) with a tank wall (14) composed of plastic which delimits a tank interior (5), wherein the tank wall (14) has a metallic wall segment (22) and the device (1) has a temperature sensor (13), **characterized in that** the temperature sensor (13) is, outside the reducing agent tank, arranged in contact with the metallic wall segment (22), wherein the temperature sensor (13) is adapted to indirectly determine a temperature of the reducing agent in the reducing agent tank (2) by way of the conductivity of the metallic wall segment (22).

2. Device (1) according to Claim 1, wherein the metallic wall segment is formed by a metallic pot (10) which extends into the tank interior (5).

3. Device (1) according to any of the preceding claims, wherein the metallic pot (10) forms a separate chamber (4) which is arranged on a tank wall (14) of the reducing agent tank (2).

4. Device (1) according to Claim 2, wherein the separate chamber (4) is arranged in the tank floor (3).

5. Device (1) according to any of the preceding claims, wherein the temperature sensor (13) is attached to the metallic wall segment (22).

6. Device (1) according to Claim 5, wherein the temperature sensor (13) is attached by material fit to the metallic wall segment (22).

7. Device (1) according to any of the preceding claims, wherein the metering unit (6) comprises at least one component from the group of the following components:
- pump;
- filter;
- pressure sensor;
- temperature sensor; and
- valve.

8. Device (1) according to any of the preceding claims, wherein the reducing agent tank (2) comprises a tank wall (14) of plastic and the metallic wall segment (22) is inserted non-detachably in the tank wall (14).

9. Motor vehicle (18) having an internal combustion engine (19) and an exhaust gas post-treatment system (20), with an injector (17) for reducing agent and a device (1) according to any of the preceding claims, wherein the injector (17) is connected with the device (1) via a reducing agent line (16).

## Revendications

1. Dispositif (1) pour fournir un agent réducteur fluide présentant un réservoir d'agent réducteur (2) avec une paroi de réservoir (14) en plastique qui délimite un intérieur de réservoir (5), la paroi de réservoir (14) présentant une portion de paroi métallique (22) et le dispositif (1) présentant un capteur de température (13), **caractérisé en ce que** le capteur de température (13) est disposé à l'extérieur du réservoir d'agent réducteur en contact avec la portion de paroi métallique (22), le capteur de température (13) étant prévu pour déterminer indirectement une température de l'agent réducteur dans le réservoir d'agent réducteur (2) par le biais de la conductibilité de la portion de paroi métallique (22).

2. Dispositif (1) selon la revendication 1, dans lequel la portion de paroi métallique est formée par un pot métallique (10) qui s'étend dans l'intérieur de réservoir (5).

3. Dispositif (1) selon l'une quelconque des revendications précédentes, dans lequel le pot métallique (10) forme une chambre séparée (4) qui est disposée au niveau d'une paroi de réservoir (14) du réservoir d'agent réducteur (2).

4. Dispositif (1) selon la revendication 2, dans lequel la chambre séparée (4) est disposée dans le fond du réservoir (3).

5. Dispositif (1) selon l'une quelconque des revendications précédentes, dans lequel le capteur de température (13) est fixé au niveau de la portion de paroi métallique (22).

6. Dispositif (1) selon la revendication 5, dans lequel le capteur de température (13) est fixé par engagement par liaison de matière à la portion de paroi métallique (22).

7. Dispositif (1) selon l'une quelconque des revendications précédentes, dans lequel l'unité de dosage (6) présente au moins un composant parmi le groupe des composants suivants:
- une pompe;
- un filtre;
- un capteur de pression;
- un capteur de température et
- une soupape.

8. Dispositif (1) selon l'une quelconque des revendications précédentes, dans lequel le réservoir d'agent réducteur (2) comprend une paroi de réservoir (14) en plastique et la portion de paroi métallique (22) est insérée de manière inamovible dans la paroi de réservoir (14).

9. Véhicule automobile (18) présentant un moteur à combustion interne (19) et un système de traitement de gaz d'échappement (20), présentant un injecteur (17) pour l'agent réducteur et un dispositif (1) selon l'une quelconque des revendications précédentes, l'injecteur (17) étant connecté au dispositif (1) par le biais d'une conduite d'agent réducteur (16).
